# FASCICULE DE BREVET EUROPEEN

(11) **EP 3 212 301 B1**
(45) Date de publication et mention de la délivrance du brevet: **20.04.2022**
(21) Numéro de dépôt: 15790609.0
(22) Date de dépôt: 20.10.2015
(51) Int. Cl.: B01D 29/52

(54) **DISPOSITIF DE FILTRATION D'HUILE DE LAMINAGE**
SCHMIERMITTEL FILTER VORRICHTUNG
LUBRICATING OIL FILTERING DEVICE

(30) Priorité: 28.10.2014 FR 1460335
(43) Date de publication de la demande: 06.09.2017
(73) Titulaire: FIVES DMS, 59139 Noyelles les Seclin (FR)
(72) Inventeur: SEQUEIRA, David, 59600 Maubeuge (FR)
(74) Mandataire: Bureau Duthoit Legros Associés
(86) Numéro de dépôt international: PCT/FR2015/052820
(87) Numéro de publication internationale: WO 2016/066926

(56) Documents cités:
- CN-A- 1 546 900
- CN-A- 103 191 600
- CN-A- 103 977 619
- CN-U- 203 154 922
- "Back-flushable filter cartridges for rolling oil filtration in stainless steel cold rolling mills", , 21 novembre 2013 (2013-11-21), XP055197007, Extrait de l'Internet: URL:http://www.hydac.com.br/wp-content/upl oads/e7219-0-11-13_dekarheo_web.pdf [extrait le 2015-06-19]

## Description

L'invention concerne un dispositif de filtration d'huile de laminage, du type à plateaux, ainsi qu'une installation de recyclage et de filtration d'huile de laminage équipée d'un tel dispositif de filtration.

Le domaine de l'invention est celui de la filtration de l'huile de laminage dans les laminoirs à froid, et plus particulièrement les laminoirs « *Sendzimir* », en particulier à vingt cylindres, connus sous l'appellation « 20-Hi » pour l'homme du métier ; un exemple de réalisation d'un tel laminoir à vingt cylindres est illustré dans les documents US 5 193 377 et US 5 471 859. Dans un tel laminoir, les cylindres sont répartis en un groupe inférieur et un groupe supérieur; plus précisément, ces groupes présentent une structure symétrique et comportent chacun dix cylindres dont : un cylindre de travail, deux premiers cylindres intermédiaires, trois seconds cylindres intermédiaires, et quatre cylindres d'appui, ou galets d'appui, qui sont à l'extérieur de l'arrangement.

Dans un laminoir, en particulier dans un laminoir à 20 cylindres, les opérations de laminage sont effectuées en projetant de l'huile sur les cylindres et la bande. Cette opération de lubrification et/ou de refroidissement est mise en oeuvre par une installation de recyclage qui comprend, successivement, disposé entre une sortie d'huile sale du laminoir et une entrée pour de l'huile propre, un circuit comprenant :
- un réservoir d'huile sale,
- un système de filtration à cartouches,
- un réservoir d'huile propre.

Un premier système de pompe, en amont du système de filtration suivant le sens d'écoulement de l'huile, est associé au système de filtration et permet d'amener l'huile au système de filtration.

Un deuxième système de pompe, situé en aval du système de filtration, permet d'aspirer l'huile au travers du média filtrant et de pousser l'huile recirculée jusqu'au réservoir d'huile propre.

Un troisième système de pompe, situé en aval du réservoir d'huile propre, permet d'amener l'huile au laminoir. Une telle architecture générale d'installation de recyclage et de filtration est connue du document CN 203355436U, et est mise en oeuvre industriellement pour des laminoirs 20 cylindres depuis les années 1970. Classiquement, l'installation peut encore comprendre des échangeurs destinés à contrôler la température de l'huile recyclée ainsi que des valves de contrôle permettant de contrôler le débit de fluide avant son entrée dans le laminoir.

Depuis cette date, il est connu d'utiliser, pour le système de filtration, plusieurs dispositifs de filtration du type à plateaux, bien souvent connus pour l'homme du métier sous l'appellation « *Supamic Filter* » du nom de son fabricant d'origine, et disposés sur le circuit de manière à réaliser une filtration de l'huile en parallèle. Un tel dispositif de filtration à plateaux est illustré schématiquement à la figure 1 du document CN 203355436U, identifié par le repère 5.

Le document CN 203154922U décrit plus en détail la structure d'un dispositif de filtration à plateaux typiquement utilisé pour la filtration des laminoirs Sendzimir depuis les années 1970.

Un tel dispositif de filtration comprend une cuve, typiquement cylindrique à l'intérieur de laquelle sont superposés plusieurs « plateaux », amovibles, répartis sur la hauteur de la cuve, et empilés les uns sur les autres grâce à des systèmes de pieds. Chacun des éléments plateaux est un élément creux sur lequel sont fixées un grand nombre de cartouches de filtration, en parallèle, typiquement par vissage de l'extrémité supérieure de la cartouche sur des parties filetées correspondante du plateau.

La cuve comprend une ouverture d'entrée pour l'huile sale, la filtration étant réalisée au travers du média filtrant de la cartouche, de l'extérieur vers l'intérieur, l'huile filtrée par la cartouche étant collectée dans le plateau, qui est un élément creux, puis conduit vers une sortie du plateau pour l'huile propre. Les sorties d'huile des différents plateaux sont respectivement connectées, de manière étanche, à des ouvertures réparties sur la hauteur de la cuve, grâce à des jeux de brides.

Au bout d'un certain temps de fonctionnement, il est nécessaire de remplacer les cartouches du dispositif de filtration ; selon la procédure actuelle l'opérateur commence par ouvrir le couvercle, à l'extrémité supérieure de la cuve, puis retire les différents plateaux, un par un, à l'aide d'un système de levage, du plateau le plus supérieur, et jusqu'au dernier plateau en fond du cuve. Une fois le plateau retiré hors de la cuve, les différences cartouches peuvent être dévissées et remplacées. Pour chaque plateau, et préalablement à l'opération de levage du plateau, l'opérateur doit nécessairement descendre dans la cuve pour dévisser les vis des jeux de brides et retirer les joints entre la sortie d'huile du plateau et l'ouverture correspondante de la cuve.

Dans les installations de laminage à froid, afin d'obtenir le débit de filtration souhaité, typiquement compris entre 4000 l/min et 27000 1/min selon la taille du laminoir, il est connu d'utiliser plusieurs dispositifs de filtration en parallèle, chacun à quatre ou cinq plateaux, le nombre de cartouches par plateau étant typiquement de l'ordre de 800. Un tel dimensionnement est, à la connaissance de l'inventeur toujours utilisé depuis les années 1970 dans ces installations de recyclage d'huile de laminage et dans le but de réduire le nombre total de dispositifs de filtration par installation de recyclage.

Ainsi et aujourd'hui encore, la présente Demanderesse fabrique de tels dispositifs de filtration à cinq plateaux, de diamètre de 2,4 mètres et de hauteur 6,1 mètres. Chaque plateau supporte 832 cartouches d'une longueur de 13 pouces chacune (soit d'une longueur de 33,02 cm). Le volume utile de la cuve est d'environ 18 m³.

Les cartouches de filtration utilisées comprennent bien souvent un média filtrant à base de nylon ou de fibres de verre. Afin de prolonger la durée de vie des cartouches, on utilise des cartouches de filtration nettoyable par contre-courant (en anglais « *back flushable-type filter* »)*.*

Le décolmatage des cartouches est réalisé à intervalle de temps régulier, et est mise en oeuvre, sur les dispositifs de filtration à plateaux, un par un. A cet effet, on met en oeuvre un contre-courant de fluide, typiquement de l'air comprimé, sur l'un des dispositifs de filtration à plateaux, et alors que les autres dispositifs de filtration à plateaux, disposés en parallèle, assurent la filtration de l'huile de laminage. Pour chaque dispositif, le décolmatage est mis en oeuvre plateau par plateau, et non simultanément sur l'ensemble des cartouches des différents plateaux. Selon les constatations de l'inventeur, plus le nombre de plateaux est important, plus le temps de cycle nécessaire au décolmatage des filtres est long. A titre d'exemple, le paramètre de temps nécessaire au décolmatage des cartouches d'un seul dispositif de filtration est d'environ 30 minutes lorsque les plateaux sont au nombre de cinq.

Pendant la mise en oeuvre de ce décolmatage, la capacité de filtration de l'installation est amputée de celle d'un dispositif, le débit de filtration global de l'installation diminuant. Les réservoirs d'huile sale et d'huile propre constituent alors des réservoirs tampon permettant de garantir un débit d'huile nominal constant au laminoir : concrètement et pendant la mise en oeuvre du contre-courant, le niveau d'huile dans le réservoir d'huile sale augmente, et le niveau dans le réservoir d'huile propre diminue, ces deux réservoirs étant dimensionnés, de volume suffisant de manière à autoriser ces variations de contenance.

Plus particulièrement, la contenance du réservoir d'huile propre est en relation directe avec les paramètres de temps et de variation de débit due au décolmatage d'un dispositif de filtration.

Ainsi, si :
- le paramètre T représente le temps nécessaire au décolmatage des cartouches d'un dispositif de filtration et,
- le paramètre ΔD, la chute de débit de filtration,
alors le réservoir d'huile propre doit être de contenance suffisante de manière à maintenir un débit nominal constant au laminoir, en compensant la chute de débit de filtration pendant tout le temps T de décolmatage: la contenance de ce réservoir est donc au moins égale à un volume égal à T ×ΔD (plus une marge de sécurité) et afin d'assurer un débit d'huile constant au laminoir. Le réservoir d'huile sale doit pouvoir accueillir un tel volume de fluide. Bien plus encore, le réservoir d'huile sale peut encore être utilisé, lors d'une maintenance sur l'ensemble des dispositifs de filtration, comme récipient lorsque les cuves des différents dispositifs sont entièrement vidées : dans un tel cas la contenance du réservoir d'huile sale doit être au moins égale à la somme des volumes utiles des cuves des différents dispositifs de filtration.

Ainsi, selon les constatations de l'inventeur, les installations de recyclage de l'état de la technique présentent un encombrement très important, et en particulier en raison de la taille des réservoirs tampon d'huile propre et d'huile sale. Cet encombrement oblige à concentrer les équipements de l'installation de recyclage à un étage inférieur au laminoir, en cave, et non au même niveau que le laminoir.

Ainsi, dans les installations de recyclage de l'état de la technique, seul le système de filtration (i.e les dispositifs de filtration à plateaux) est installé au même niveau que celui du laminoir et facilement accessible, les autres équipements, à savoir le réservoir d'huile sale, le réservoir d'huile propre, ainsi que les différentes pompes, échangeurs et valves étant alors installés dans une cave de taille conséquente et dédiée à l'intégration de l'ensemble de ces équipements.

Selon les constatations de l'inventeur, cette large cave représente, lors de la construction de l'atelier de laminage, un coût important, en raison des coûts de génie civil notamment en raison du volume de matériaux (bétons), ainsi que des aménagements de sécurité au feu, ainsi que de la taille du système de ventilation de la cave. Un autre inconvénient d'une telle conception est que les équipements présents dans la cave sont bien souvent peu accessibles, pour la maintenance.

Selon les constatations de l'inventeur, une telle conception d'installation de recyclage, telle qu'elle est connue depuis les années 1970 et toujours respectée jusqu'à aujourd'hui peut être améliorée.

Le but de la présente invention est de proposer un dispositif de filtration à plateaux, de nouvelle conception, qui pallie les inconvénients précités, et en particulier qui autorise une réduction substantielle des coûts de l'installation, voire un meilleur accès aux équipements de l'installation de recyclage.

D'autres buts et avantages de l'invention apparaitront au cours de la description qui va suivre qui n'est donnée qu'à titre indicatif.

Aussi l'invention concerne un procédé de recyclage et de filtration d'huile de laminoir mis en oeuvre pour un laminoir nécessitant un débit d'huile de laminage compris entre 4000 l/min et 27000 l/min dans une installation de recyclage et de filtration d'huile du laminoir présentant un circuit comprenant, successivement, selon le sens d'écoulement de l'huile :
- un réservoir d'huile sale,
- un système de filtration comprenant plusieurs dispositifs de filtration d'huile aptes à réaliser une filtration de l'huile en parallèle,
- un réservoir d'huile propre,
- et dans lequel chaque dispositif de filtration présente :
   - une cuve comprenant une entrée pour de l'huile à filtrer, ainsi qu'un couvercle
   - au moins un élément plateau, voire une pluralité d'éléments plateaux, superposés dans le volume interne de la cuve, amovibles, aptes à être retirés hors de la cuve par l'ouverture supérieure du couvercle, chacun des éléments plateaux recevant de manière amovible des cartouches de filtration, chacun des éléments plateaux, creux constituant un collecteur pour l'huile filtrée par les cartouches dudit élément plateau, chacun des éléments plateaux comprenant une sortie d'huile filtrée connectée de manière amovible à une sortie correspondante de la cuve par l'intermédiaire d'un raccord.

Selon le procédé conforme à l'invention, on choisit pour chacun des dispositifs de filtration, un dispositif de filtration dont :
- le volume utile de la cuve de réception d'huile est inférieur à 15 m³,
- les éléments plateaux sont de nombre compris entre un et trois,
- le nombre total de cartouches de filtration du dispositif est compris entre 500 et 3000 cartouches,
et procédé dans lequel on met en oeuvre une filtration assurant un débit nominal de filtration compris entre 1000 l/min et 4000 l/min par dispositif de filtration.

Lorsque le nombre d'éléments plateaux est égal à trois, le nombre de cartouches par élément plateau est compris entre 500 et 1000, par exemple entre 700 et 900, le volume utile de la cuve du dispositif de filtration est compris entre 9 m³ et 12 m³ et le débit nominal de filtration du dispositif de filtration compris entre 3000 l/min et 4000 l/min.

Lorsque le nombre d'éléments plateaux est égal à deux, le nombre de cartouches par élément plateau est compris entre 500 et 1000, par exemple entre 700 et 900, le volume utile de la cuve du dispositif de filtration est compris entre 6 m³ et 9 m³ et le débit nominal de filtration du dispositif de filtration compris entre 2000 l/min et 3000 l/min.

Lorsque le nombre d'éléments plateaux est égal à un, le nombre de cartouches par élément plateau est compris entre 500 et 1000 par exemple entre 700 et 900, le débit nominal de filtration compris entre 1000 l/min et 2000 l/min.

Selon l'invention, la longueur des cartouches est comprise entre 16 pouces (40,64 cm) et 24 pouces (60,96 cm), de préférence entre 17 pouces (43,18 cm) et 24 pouces (60,96 cm), telle que 20 pouces (50,80 cm).

On utilise des cartouches de filtration nettoyable par contre-courant, et on procède à un décolmatage des cartouches à intervalle de temps régulier mise en oeuvre, sur les dispositifs de filtration à plateaux, un par un, en mettant en œuvre un contre-courant de fluide, sur l'un des dispositifs de filtration à plateaux, plateau par plateau pour chaque dispositif filtration, et alors que les autres dispositifs de filtration à plateaux, disposés en parallèle, assurent la filtration de l'huile de laminage.

Selon des caractéristiques optionnelles de l'invention, prises seules ou en combinaison :
- le diamètre de la cuve est compris entre 1,5 mètres et 2,3 mètres ;
- la hauteur de ladite cuve est inférieure à 4 mètres, de préférence comprise entre 1,5 et 4 mètres en particulier lorsque ledit dispositif est à trois éléments plateaux;

Selon des caractéristiques optionnelles de l'installation, prises seules ou en combinaison :
- ledit réservoir d'huile sale étant situé à un niveau inférieur du laminoir, dans une cave, le réservoir d'huile propre, et le système de filtration sont situés au dehors de la cave, à un niveau supérieur.
- ledit réservoir d'huile sale est situé dans ladite cave, à proximité immédiate dudit laminoir ;
- l'installation dont le circuit présente un système de pompe et un système de valve pour contrôler le débit d'huile propre arrivant au laminoir, ainsi qu'un système d'échangeur, destiné à contrôler la température de l'huile propre, ledit système de pompe, ledit système de valve et le système d'échangeur étant situés en dehors de la cave, à un niveau supérieur.
- le laminoir est un laminoir 20-Hi.

L'invention sera mieux comprise à la lecture de la description suivante, accompagnée des dessins en annexe, parmi lesquels :
- La figure 1 est une vue schématique d'une installation de recyclage d'huile d'un laminoir 20 cylindres, telle que connue de l'état de la technique,
- La figure 2 est une vue d'un dispositif de filtration à cinq plateaux, tel que connu de l'état de la technique,
- La figure 2a est une photo d'un plateau avec ses cartouches d'un dispositif du type de la figure 2,
- La figure 3 est une vue de l'agencement au sol des équipements d'une installation de recyclage selon l'état de la technique de la figure 1,
- Les figures 4 et 5 sont respectivement des vues comparatives entre un dispositif de filtration selon l'état de la technique (figure 4) et un dispositif de filtration selon l'invention (figure 5),
- Les figures 6 et 7 sont une vue d'un nouvel agencement au sol des équipements d'une installation de recyclage selon l'invention.

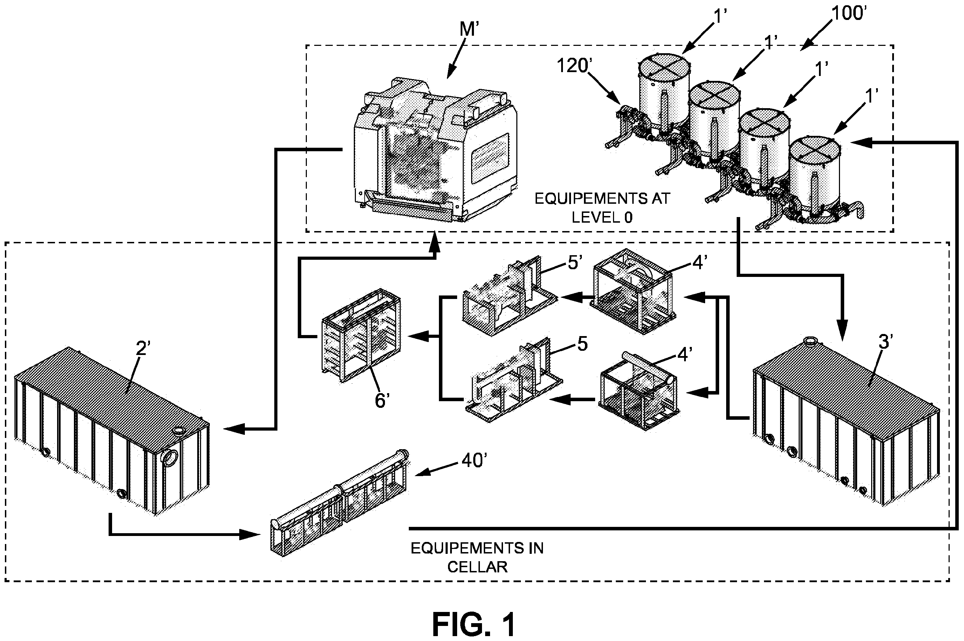

Nous commençons tout d'abord par décrire l'architecture d'une installation de recyclage et de filtration d'huile de laminage telle que connue de l'état de la technique, et telle qu'illustrée des figures 1 à 4 pour un laminoir M' du type 20 -Hi.

L'installation présente un circuit, illustré schématiquement à la figure 1 et qui comprend, entre une sortie d'huile sale du laminoir et une entrée d'huile propre, selon le sens normal d'écoulement de l'huile :
- un réservoir d'huile sale 2',
- un système de pompes 110' (alimentation du système de la filtration),
- un système de filtration 100' comprenant les dispositifs de filtration et pompes,
- un système de pompe 120' (extraction du système de filtration),
- un réservoir d'huile propre 3',
- un système de pompes 4' (pour le laminoir M'),
- un système d'échangeurs 5',
- un système de valves 6'.

Dans un tel circuit, l'huile sale est collectée dans le réservoir d'huile sale 2, avant d'être acheminée, poussée par le système de pompes 110' dans le système de filtration 100'.

L'huile filtrée est ensuite stockée dans le réservoir d'huile propre 3'. Le système de pompe 4' et de valve 6' permet ensuite d'alimenter le laminoir M' selon le débit nominal souhaité au laminoir. Le système d'échangeur 5, notamment du type eau/huile permet de régler la température de l'huile souhaitée. L'installation illustrée est dimensionnée pour assurer un débit de fluide au laminoir constant, typiquement compris entre 4000 l/min et 27000 l/min, le système de filtration 100' comprenant, une pluralité de dispositifs de filtration à plateaux 100' (au nombre de quatre sur la figure 1), du type du fabriquant SUPAMIC, et connu depuis les années 1970, dans ce type d'installation de recyclage.

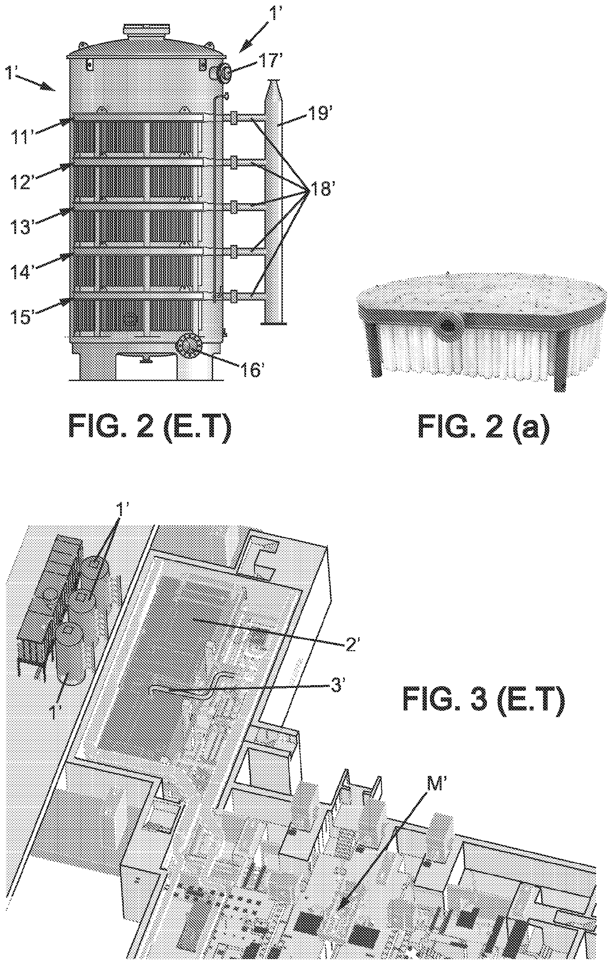

Un tel dispositif de filtration comprend, tel qu'illustré à la figure 2, une cuve 10', typiquement cylindrique à l'intérieur de laquelle sont superposés plusieurs « plateaux », amovibles, repérés 11', 12', 13', 14' et 15', répartis sur la hauteur de la cuve, et empilés les uns sur les autres grâce à des systèmes de pieds. Chacun des plateaux est un élément creux sur lequel sont fixées un grand nombre de cartouches de filtration, en parallèle, typiquement par vissage de l'extrémité supérieure de la cartouche sur des parties filetées correspondant du plateau.

La cuve 10' comprend une ouverture pour l'huile sale 16', inférieure et une ouverture de trop plein 17', située au-dessus des plateaux. La filtration est réalisée au travers du média filtrant des différentes cartouches, de l'extérieur vers l'intérieur, l'huile filtrée par les cartouches étant collectée dans chacun des plateaux, qui sont des éléments creux, puis conduit vers une sortie du plateau pour l'huile propre. Les sorties d'huile des différents plateaux sont respectivement connectées, de manière étanche, à des ouvertures réparties sur la hauteur de la cuve, grâce à des jeux de brides. Les différences sorties 18' d'huile filtrée se rejoignent dans un même conduit vertical 19'.

A la connaissance de l'inventeur, afin de limiter le nombre de dispositifs de filtration, et dans le but de limiter le coût de l'installation, il est d'usage pour l'homme du métier de choisir des dispositifs de filtration à forte capacité de filtration, de capacité de filtration supérieure à 4000 l/min et qui sont toujours à quatre ou cinq plateaux.

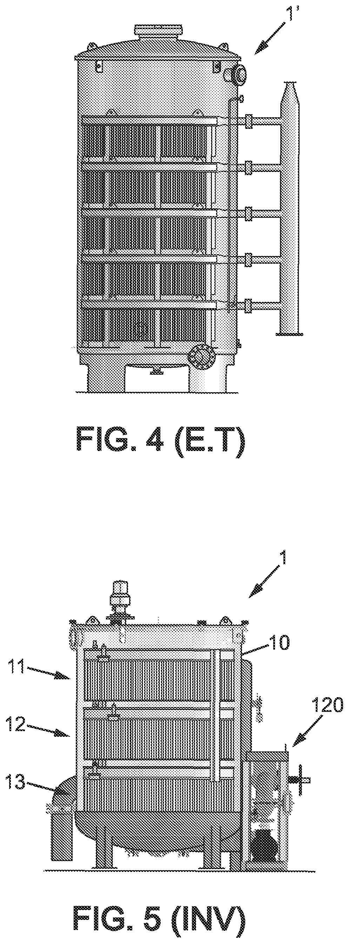

La figure 4 illustre un tel dispositif de filtration à cinq plateaux présentant les caractéristiques suivantes :

| | |
|---|---|
| - Nombre plateaux : | 5 |
| - Longueur cartouches : | 13 pouces (soit 33,02 cm), |
| - Nombre de cartouches : | 4160 (832 cartouches par plateau), |
| - Hauteur cuve dispositif : | 6.1 mètres, |
| - Volume utile (huile) : | 18 m³, |
| - Durée de décolmatage : | 30 min |

Un tel dispositif de filtration présente une capacité de filtration supérieure à 4000 l/min. Le système de filtration d'une installation de recyclage et de filtration équipant un laminoir dont le débit d'huile est de 12 000 l/min nécessite seulement trois dispositifs 1' selon la figure 4, agencés en parallèle et tel qu'illustré à la figure 3.

Les cartouches de filtration utilisées comprennent bien souvent un média filtrant à base de nylon ou de fibres de verre. Afin de prolonger la durée de vie des cartouches, on utilise des cartouches de filtration nettoyable par contre-courant (en anglais « *back flushable-type filter* »)*.*

Le décolmatage des cartouches est réalisé à intervalle de temps régulier, et est mis en œuvre, sur les dispositifs de filtration à plateaux, un par un. A cet effet, on met en œuvre un contre-courant de fluide (air comprimé) sur l'un des dispositifs de filtration à plateaux, et alors que les autres dispositifs de filtration à plateaux, disposés en parallèle, assurent la filtration de l'huile de laminage. Pour chaque dispositif, le décolmatage est mis en œuvre plateau par plateau, et non simultanément sur l'ensemble des cartouches des différents plateaux.

L'invention est née de la volonté de l'inventeur de changer fondamentalement le dimensionnement des installations de recyclage telles que connues de l'état de la technique, ainsi que l'agencement au sol des différents équipements qui la composent. L'invention est née de la constatation par l'inventeur que les dispositifs de filtration à quatre ou cinq plateaux de l'état de la technique sont bénéfiques en ce que, de capacité de filtration importante, ils permettent de réduire le nombre des dispositifs de filtration nécessaires à l'installation, mais présentent toutefois l'inconvénient d'une durée de décolmatage importante, en raison du nombre important de plateaux par dispositif.

Plus encore, l'invention est née de la constatation par l'inventeur que cette durée de décolmatage importante, ainsi que le fait de présenter un nombre de dispositifs en parallèle le plus petit possible oblige à surdimensionner le réservoir d'huile sale 2' et le réservoir d'huile propre 3', ce qui oblige ensuite l'homme du métier à agencer ces équipements dans une large cave dédiée, comme représenté à la figure 3.

En effet, la contenance de ces deux réservoirs est en relation directe avec le volume T×ΔD:
- le paramètre T représentant le temps nécessaire au décolmatage des cartouches d'un dispositif de filtration et,
- le paramètre ΔD, la chute de débit de filtration.

Selon ces constatations de l'inventeur, plus le nombre de plateaux est important plus les deux paramètres T et ΔD seront grands. En effet, la durée de décolmatage est directement proportionnelle au nombre de plateaux. Par ailleurs et plus la capacité de filtration de chaque dispositif est importante, moins les dispositifs seront en nombre important, et donc plus la chute de débit ΔD sera grande lorsque l'un des dispositifs est inhibé pour la mise en œuvre du nettoyage par contre-courant.

L'invention vise donc à concevoir et dimensionner un dispositif de filtration du type à plateaux et de manière à réduire substantiellement le coût global de l'installation.

Selon l'invention, le dispositif de filtration est conçu de telle façon à pouvoir réduire substantiellement les volumes de réservoirs d'huile sale et d'huile propre Aussi l'invention est relative à un dispositif 1 de filtration d'huile, comprenant :
- une cuve 10 comprenant une entrée pour de l'huile à filtrer, ainsi qu'un couvercle
- au moins un élément plateau, voire une pluralité d'éléments plateaux 11,12 13, amovibles, superposés dans le volume interne de la cuve, aptes à être retirés hors de la cuve 10 par l'ouverture supérieure du couvercle, chacun des éléments plateaux recevant de manière amovible des cartouches de filtration, chacun des éléments plateaux, creux constituant un collecteur pour l'huile filtrée par les cartouches dudit élément plateau, chacun des éléments plateaux comprenant une sortie d'huile connectée de manière amovible à une sortie correspondante de la cuve par l'intermédiaire d'un raccord.

Les éléments plateaux 11, 12, 13 comprennent chacun un corps creux à fonction de collecteur pour huile filtrée, ainsi qu'une sortie destinée à être raccordée à une ouverture correspondante de la cuve. Le raccordement peut être effectué, selon l'état de la technique au moyen d'un jeu de brides.

La fixation des cartouches de filtration s'effectue de préférence sur la sous-face de chaque élément plateau, par exemple par vissage, au moyen de parties filetées mutuellement engageantes. Les cartouches de filtration réalisent une filtration de l'huile en parallèle et au débit de fonctionnement donné par le fabriquant de la cartouche de filtration, de l'extérieur vers l'intérieur de la cartouche.

Chaque élément plateau 11, 12 ou 13 peut encore comprendre, selon un mode de réalisation des pieds s'étendant depuis le corps creux et jusqu'en dessous des extrémités inférieures des cartouches de filtration. Ces pieds permettent notamment d'empiler les éléments plateaux les uns sur les autres : les pieds dudit élément plateau le plus inférieur appuient sur le fond de cuve, les pieds des éléments plateaux supérieurs appuyant respectivement sur les faces supérieures des plateaux inférieurs correspondants.

Le dispositif peut encore comprendre une ouverture de trop plein (ou surverse), située au-dessus des éléments plateaux et permettant de recycler l'huile non filtrée jusqu'à l'ouverture d'entrée de la cuve

Selon l'invention :
- les éléments plateaux 11, 12, 13 sont de nombre compris entre un et trois,
- le nombre total de cartouches de filtration du dispositif est compris entre 500 et 3000 cartouches,
et de telle façon à autoriser un débit nominal de filtration compris entre 1000 l/min et 4000 l/min.

Selon un mode de réalisation (notamment illustré), le nombre d'éléments plateaux est égal à trois, le nombre de cartouches par élément plateau étant de préférence compris entre 500 et 1000, le débit nominal de filtration compris entre 3000 l/min et 4000 l/min.

Selon une alternative (non illustrée), le nombre d'éléments plateaux est égal à deux, le nombre de cartouches par élément plateau étant de préférence compris entre 500 et 1000, le débit nominal de filtration du dispositif de filtration compris entre 2000 l/min et 3000 l/min.

Encore selon une autre alternative (non illustrée), le nombre d'éléments plateaux est égal à un, le nombre de cartouches par élément plateau étant de préférence compris entre 500 et 1000, le débit nominal de filtration compris entre 1000 l/min et 2000 l/min.

Selon une première caractéristique de l'invention, le nombre d'éléments plateaux est seulement de trois (ou inférieur) par dispositif de filtration, et non de quatre ou cinq tel que connu dans les installations de recyclage et de filtration de l'état de la technique.

Selon les constatations de l'inventeur, réduire le nombre d'éléments plateaux à trois au maximum (et non de quatre ou cinq selon l'état de la technique) permet de réaliser le décolmatage de l'ensemble des cartouches de filtration du dispositif par la mise en œuvre de trois contre-courants de fluide au maximum seulement (i.e. air comprimé), et par exemple trois contre-courants successivement sur les trois éléments plateaux 11, 12, 13 d'un dispositif à trois plateaux. Le nombre de contre-courants mis en œuvre correspond au nombre d'éléments plateaux du dispositif.

On obtient ainsi avantageusement une réduction substantielle de la durée de décolmatage par comparaison au dispositif de filtration de l'état de la technique qui nécessite la mise en œuvre d'au moins quatre contre-courants, voire cinq.

Cette réduction du nombre d'éléments plateaux permet par ailleurs de limiter la hauteur du dispositif et en particulier la hauteur de la cuve.

Le dispositif de filtration selon l'invention se caractérise également par sa capacité de filtration importante, c'est-à-dire comprise entre 1000 l/min et 4000 l/min, ce qui permet de ne pas trop augmenter leur nombre dans une installation de recyclage et de filtration : cette capacité de filtration du dispositif est donnée par le nombre de cartouches multiplié par le débit de fonctionnement de la cartouche de filtration (donnée fabriquant). A cet effet, le nombre total de cartouches par dispositif peut être compris entre 500 et 3000.

Plus particulièrement, le nombre total de cartouches peut être :
- compris entre 500 et 1000 pour un dispositif de filtration à élément plateau unique,
- compris entre 1000 et 2000 pour un dispositif de filtration à deux éléments plateaux superposés,
- compris entre 1500 et 3000 pour un dispositif de filtration à trois éléments plateaux. Les cartouches de filtration sont du type nettoyable par contre-courant : le média filtrant peut être à base de nylon ou de fibres de verre.

Les dimensions de la cuve, notamment le diamètre de la cuve 10 est de préférence inférieur ou égal à 2,3 mètres, notamment compris entre 1,5 mètres et 2,3 mètres et de telle façon à pouvoir acheminer le dispositif par conteneur de dimension standard dont les dimensions intérieurs sont les suivantes :
- largeur : 2,33 m ;
- hauteur : 2,38 m ;
- hauteur passage de porte : 2,30 m ;
- longueur : 5.905 m ou 12.04m.

La hauteur de la cuve peut être inférieure à 5 mètres, de préférence, inférieure à 4 mètres telle que par exemple 3,1 mètres, notamment comprise entre 3 et 4 mètres lorsque le dispositif comprend trois éléments plateaux 11, 12, 13.

La hauteur de la cuve peut être comprise entre 2 mètres et 3 mètres lorsque le dispositif est à deux éléments plateaux.

La hauteur de la cuve peut être comprise entre 1 mètre et 2 mètres lorsque le dispositif est à un seul élément plateau.

Afin de conserver de bonnes capacités de filtration, les cartouches de filtration peuvent être de longueur supérieure ou égale à 16 pouces, de préférence de longueur comprise entre 16 pouces (40,64 cm) et 24 pouces (60,96 cm), encore plus de préférence entre 17 pouces (43,18 cm) et 24 pouces (60,96cm), par exemple entre 18 pouces (45,72 cm) et 22 pouces (55,88 cm), telle que 20 pouces (50,80 cm). A titre d'exemple, le débit de fonctionnement nominal d'une cartouche de filtration 20 pouces est de 1,54 l/min (cartouches de fabriquant Hydac ou Pall).

Le volume utile (volume de réception d'huile) de la cuve du dispositif est inférieur à 15 m³, savoir :
- compris entre 9 m³ et 12 m³lorsque le dispositif est à trois éléments plateaux 11, 12, 13,
- compris entre 6 m³ et 9 m³ lorsque le dispositif est à deux éléments plateaux,
- compris entre 3 m³ et 6 m³ lorsque le dispositif est à un seul élément plateau.

Limiter le volume utile de la cuve participe à la réduction du volume du réservoir d'huile sale, qui bien souvent doit permettre de vider en son sein, la totalité de l'huile contenue dans les cuves des différents dispositifs de filtration.

Nous donnons à titre d'exemple non limitatif, dans le tableau n°1 comparatif ci-dessous, un exemple de dispositif de filtration selon l'état de la technique qui est utilisé dans une installation de recyclage et de filtration, et son remplaçant selon l'invention.

| | Dispositif de filtration 1' (Etat de la technique) | Dispositif de filtration 1 (Invention) |
|---|---|---|
| Longueur de cartouche | 13 pouces (soit 33,02 cm) | 20 pouces (soit 50,08 cm) |
| Nombre de cartouches | 4160 | 2223 |
| Diamètre dispositif (cuve) | 2,4 mètres | 2,2 mètres |
| Hauteur dispositif (cuve) | 6,1 mètres | 3,1 mètres |
| Nombre d'éléments plateaux | 5 | 3 |
| Volume utile dispositif | 18 m³ | 15 m³ |
| Durée de décolmatage | 29,7 min | 18,5 min |

Le système de filtration d'un laminoir nécessitant un débit d'huile de laminage de 12 000 l/min nécessitera seulement trois dispositifs 1' de filtration selon l'état de la technique, montés en parallèle, alors que quatre dispositifs 1 selon l'invention seront nécessaires.

L'invention concerne également une installation de recyclage et de filtration d'huile d'un laminoir présentant un circuit comprenant, successivement, selon le sens d'écoulement de l'huile :
- un réservoir d'huile sale 2,
- un système de filtration 100 comprenant un ou plusieurs dispositifs de filtration 1 d'huile selon l'invention,
- un réservoir d'huile propre 3.

Le système de filtration 100 comprend de préférence plusieurs dispositifs de filtration d'huile 1 selon l'invention aptes à réaliser la filtration de l'huile en parallèle. Leur nombre dépend du débit d'huile au laminoir, typiquement compris entre 4000 l/min et 27000 l/min et est de préférence supérieur ou égal à 3.

L'installation peut comprendre également un système de pompes 4 et un système de valves 6 pour contrôler le débit d'huile propre arrivant au laminoir M, en aval du réservoir d'huile propre 3, ainsi qu'un système d'échangeurs 5 notamment eau/huile, destiné à contrôler la température de l'huile propre. L'installation peut encore comprendre un système de pompe 110 en amont des dispositifs 1 du système de filtration 100 et destiné à pousser l'huile sale jusqu'au système de filtration, un système de pompe 120 en aval des dispositifs 1 du système de filtration100 et destiné à aspirer l'huile au travers du média filtrant.

L'installation comprend encore un autre système de décolmatage mettant en œuvre un contre-courant (air comprimé), dispositif 1 par dispositif 1 et alors que les autres dispositifs de filtration à plateaux, disposés en parallèle, assurent la filtration de l'huile de laminage. Pour chaque dispositif, le décolmatage s'opère plateau par plateau, et non simultanément sur l'ensemble des cartouches des différents plateaux.

Les dispositifs selon l'invention permettant de réduire sensiblement les dimensionnements du réservoir d'huile propre 3 et du réservoir d'huile sale 2, l'invention permet d'envisager d'autres configurations au sol que celle imposée par l'état de la technique.

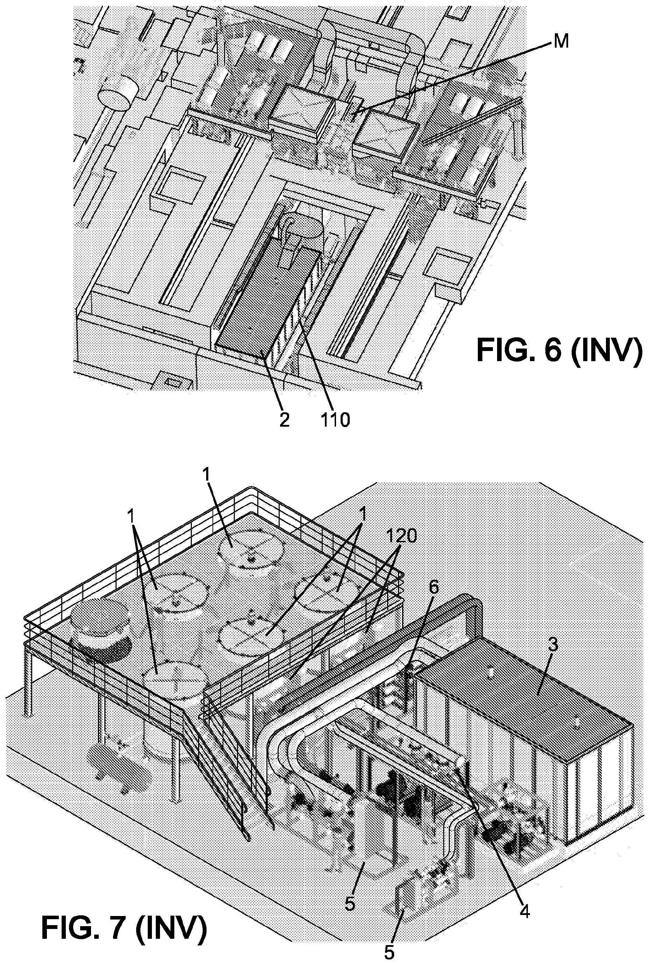

Ainsi, ledit réservoir d'huile sale 2 peut être situé à un niveau inférieur au laminoir (M), dans une cave notamment afin de récupérer l'huile de manière gravitaire. En revanche et selon l'invention, le réservoir d'huile propre 3 (ainsi que notamment le système de filtration 100) peut avantageusement être situé au dehors de la cave, à un niveau supérieur. De même ledit système de pompe 4, ledit système de valves 6, voire le système d'échangeurs 5 peuvent être situés en dehors de la cave, à un niveau supérieur, tel qu'illustré à la figure 7.

La diminution des dimensions du réservoir d'huile sale 2 autorise avantageusement le positionnement de ce dernier dans une cave, telle qu'illustrée à la figure 6, éventuellement légèrement agrandie, avantageusement à proximité immédiate du laminoir, cave qui est bien souvent présente pour autoriser l'accès au système de vérin inférieur du laminoir. Cette cave permet d'accueillir également le système de pompes 110 du système de filtration.

L'installation de filtration et de recyclage selon l'invention trouve une application particulière pour les laminoirs à 20 cylindres, encore appelés 20-Hi par l'homme du métier.

Le tableau comparatif n°2 ci-après illustre les gains simulés, pour un laminoir dont le débit d'huile est de 12 000 l/min, pour une installation comprenant quatre dispositifs 1 selon l'invention (à trois éléments plateaux) tels que définis au tableau n°1, et dont l'agencement au sol est amélioré selon les figures 6 et 7, et par comparaison avec une installation selon l'état de la technique comprenant trois dispositifs (à cinq éléments plateaux) selon l'état de la technique, tels que définis au tableau n°1, et selon l'agencement au sol connu de l'état de la technique et illustré à la figure 3.

| Installation | Etat de la technique | Invention | Gain Delta |
|---|---|---|---|
| Nombre cartouches | 12480 | 8892 | -7% |
| Volume d'huile | 295 m³ | 172 m³ | -42% |
| Encombrement au sol (y compris laminoir) | 1800 m² | 1300 m² | -28% |
| Volume béton | 5200 m³ | 3400 m³ | -35% |
| Poids CO2 (Sécurité au feu cave) | 2898 kg | 966 kg | -67% |
| Energie annuelle ventilation cave | 253 440 kW | 86 400kW | -66% |

L'invention permet par ailleurs des gains substantiels sur les coûts des cartouches, des pompes, valves, réservoirs de l'installation et du système de filtration qui sont ainsi optimisés.

La plupart des équipements, y compris les dispositifs de filtration peuvent être transportés par conteneurs standards, et contrairement aux mêmes équipements de l'état de la technique qui requièrent un transport exceptionnel.

### NOMENCLATURE

### Invention (Figures 5 à 7):

1. Dispositif de filtration à trois plateaux,
10. Cuve.
11, 12, 13. Eléments plateau
2. Réservoir d'huile sale,
3. Réservoir d'huile propre,
4. Système de pompes (laminoir)
5. Système d'échangeurs,
6. Système de valves,
100. Système de filtration,
110. Système de pompes (alimentation du système de filtration),
120. Système de pompes (extraction d'huile du système de filtration), M. Laminoir.

### Etat de la technique (Figures 1 à 4) :

1'. Dispositif de filtration à cinq plateaux,
10'. Cuve,
11', 12', 13', 14', 15'. Eléments plateaux,
16'. Ouverture entrée huile sale,
17'. Ouverture trop plein (surverse),
18'. Sorties huile filtrée,
19'. Conduite huile filtrée,
2'. Réservoir d'huile sale,
3.' Réservoir d'huile propre,
4'. Système de pompes (Laminoir M'),
5'. Système d'échangeur,
6'. Système de valves,
100'. Système de filtration,
110'. Système de pompes (Alimentation du système de filtration),
120'. Système de pompes (extraction d'huile du système de filtration),
M'. Laminoir.

## Revendications

1. Procédé de recyclage et de filtration d'huile de laminoir mis en œuvre pour un laminoir nécessitant un débit d'huile de laminage compris entre 4000 l/min et 27000 l/min dans une installation de recyclage et de filtration d'huile du laminoir présentant un circuit comprenant, successivement, selon le sens d'écoulement de l'huile :
- un réservoir d'huile sale (2),
- un système de filtration (100) comprenant plusieurs dispositifs de filtration (1) d'huile aptes à réaliser une filtration de l'huile en parallèle,
- un réservoir d'huile propre (3),
- et dans lequel chaque dispositif de filtration présente :
- une cuve (10) comprenant une entrée pour de l'huile à filtrer, ainsi qu'un couvercle
- au moins un élément plateau, voire une pluralité d'éléments plateaux, superposés dans le volume interne de la cuve, amovibles, aptes à être retirés hors de la cuve par l'ouverture supérieure du couvercle, chacun des éléments plateaux recevant de manière amovible des cartouches de filtration, chacun des éléments plateaux, creux constituant un collecteur pour l'huile filtrée par les cartouches dudit élément plateau, chacun des éléments plateaux comprenant une sortie d'huile filtrée connectée de manière amovible à une sortie correspondante de la cuve par l'intermédiaire d'un raccord,
**caractérisé en ce qu'**on choisit, pour chacun des dispositifs de filtration, un dispositif de filtration (1) dont :
- les éléments plateaux (11,12,13) sont de nombre compris entre un et trois,
- le nombre total de cartouches de filtration du dispositif est compris entre 500 et 3000 cartouches,
et procédé dans lequel on met en œuvre une filtration assurant un débit nominal de filtration compris entre 1000 l/min et 4000 l/min par dispositif de filtration (1), et dans lequel :
- lorsque le nombre d'éléments plateaux (11, 12, 13) par dispositif de filtration (1) est égal à trois, le nombre de cartouches par élément plateau étant compris entre 500 et 1000, le volume utile de la cuve (10) du dispositif de filtration (1) est compris entre 9 m³ et 12 m³ et procédé dans lequel on met en œuvre une filtration assurant un débit nominal de filtration compris entre 3000 l/min et 4000 l/min par dispositif de filtration,
- lorsque le nombre d'éléments plateaux est égal à deux, le nombre de cartouches par élément plateau étant compris entre 500 et 1000, le volume utile de la cuve (10) du dispositif de filtration (1) est compris entre 6 m³ et 9 m³ et procédé dans lequel on met en œuvre une filtration assurant un débit nominal de filtration compris entre 2000 l/min et 3000 l/min par dispositif de filtration
- lorsque le nombre d'éléments plateaux est égal à un, le nombre de cartouches par élément plateau étant compris entre 500 et 1000, le volume utile de la cuve (10) du dispositif de filtration (1) est compris entre 3 m³ et 6 m³ et procédé dans lequel on met en œuvre une filtration assurant un débit nominal de filtration compris entre 1000 l/min et 2000 l/min par dispositif de filtration, et procédé dans lequel on choisit pour les cartouches, des cartouches dont la longueur est comprise entre 16 pouces et 24 pouces, autrement dit entre 40,64 cm et 60,96 cm, et procédé dans lequel on utilise des cartouches de filtration nettoyable par contre-courant, et on procède à un décolmatage des cartouches à intervalle de temps régulier mis en œuvre, sur les dispositifs de filtration à plateaux, un par un, en mettant en œuvre un contre-courant de fluide, sur l'un des dispositifs de filtration à plateaux, plateau par plateau pour chaque dispositif filtration, et alors que les autres dispositifs de filtration à plateaux, disposés en parallèle, assurent la filtration de l'huile de laminage.

2. Procédé selon la revendication 1 dans lequel le nombre d'éléments plateaux (11, 12, 13) par dispositif de filtration (1) est égal à trois, le nombre de cartouches par élément plateau étant compris entre 500 et 1000, le volume utile de la cuve (10) du dispositif de filtration (1) est compris entre 9 m³ et 12 m³ et procédé dans lequel on met en œuvre une filtration assurant un débit nominal de filtration compris entre 3000 l/min et 4000 l/min par dispositif de filtration.

3. Procédé selon la revendication 1, dans lequel le nombre d'éléments plateaux est égal à deux, le nombre de cartouches par élément plateau étant compris entre 500 et 1000, le volume utile de la cuve (10) du dispositif de filtration (1) est compris entre 6 m³ et 9 m³ et procédé dans lequel on met en œuvre une filtration assurant un débit nominal de filtration compris entre 2000 l/min et 3000 l/min par dispositif de filtration.

4. Procédé selon la revendication 1, dans lequel le nombre d'éléments plateaux est égal à un, le nombre de cartouches par élément plateau étant compris entre 500 et 1000, le volume utile de la cuve (10) du dispositif de filtration (1) est compris entre 6 m³ à 9 m³ et procédé dans lequel on met en œuvre une filtration assurant un débit nominal de filtration compris entre 1000 l/min et 2000 l/min par dispositif de filtration.

5. Procédé selon l'une des revendications 1 à 4 dans lequel on choisit pour chaque cuve des dispositifs de filtration une cuve dont le diamètre (10) est compris entre 1,5 mètres et 2,3 mètres.

6. Procédé selon l'une des revendications 1 à 5, dans lequel on choisit pour chaque cuve des dispositifs de filtration une cuve dont la hauteur est inférieure à 4 m, comprise entre 3 et 4 mètres lorsque le dispositif est à trois éléments plateaux (11, 12, 13).

7. Procédé selon l'une des revendications 1 à 6, dans lequel ledit réservoir d'huile sale (2) est situé à un niveau inférieur du laminoir (M), dans une cave, le réservoir d'huile propre (3), et le système de filtration (100) sont situés au dehors de la cave, à un niveau supérieur.

8. Procédé selon l'une des revendications 1 à 7, dans lequel ledit réservoir d'huile sale (2) est situé dans ladite cave, à proximité immédiate dudit laminoir (M).

9. Procédé selon l'une des revendications 1 à 8, dont le circuit présente un système de pompes (4) et un système de valves (6) pour contrôler le débit d'huile propre arrivant au laminoir, ainsi qu'un système d'échangeurs (5), destiné à contrôler la température de l'huile propre, et en ce que ledit système de pompes (4), ledit système de valves (6) et le système d'échangeurs (5) sont situés en dehors de la cave, à un niveau supérieur.

## Patentansprüche

1. Verfahren zum Recyceln und Filtern von Schmieröl, das für ein Walzwerk, das eine Schmiermittelmenge zwischen 4000 l/min und 27 000 l/min benötigt, eingesetzt wird, in einer Recycling- und Filteranlage des Walzwerks, umfassend einen Kreislauf, der nacheinander in Fließrichtung des Öls aufweist:
- einen Behälter für schmutziges Öl (2),
- ein Filtersystem (100), umfassend mehrere Ölfiltervorrichtungen (1), die geeignet sind, ein Filtern des Öls parallel durchzuführen,
- einen Behälter für sauberes Öl (3),
- und bei dem jede Filtervorrichtung umfasst:
- eine Wanne (10), umfassend einen Eingang für das zu filternde Öl sowie einen Deckel,
- mindestens ein Plattenelement bzw. eine Vielzahl von Plattenelementen, die in dem Innenvolumen der Wanne übereinander gelagert sind, die geeignet sind, aus der Wanne durch die obere Öffnung des Deckels entnommen zu werden, wobei jedes der Plattenelemente Filterpatronen lösbar aufnimmt, wobei jedes der Plattenelemente, die hohl sind, einen Kollektor für das von den Patronen des Plattenelements gefilterte Öl darstellt, wobei jedes der Plattenelemente einen Ausgang für gefiltertes Öl umfasst, der lösbar mit einem entsprechenden Ausgang der Wanne durch einen Anschluss verbunden ist,
**dadurch gekennzeichnet, dass** für jede der Filtervorrichtungen eine Filtervorrichtung (1) ausgewählt wird, bei der:
- die Plattenelemente (11, 12, 13) in einer Anzahl zwischen eins und drei vorhanden sind,
- die Gesamtanzahl von Filterpatronen der Vorrichtung zwischen 500 und 3000 Patronen liegt,
und bei welchem Verfahren eine Filterung eingesetzt wird, die eine Nominalfiltermenge zwischen 1000 l/min und 4000 l/min pro Filtervorrichtung (1) gewährleistet, und bei dem:
- wenn die Anzahl von Plattenelementen (11, 12, 13) pro Filtervorrichtung (1) gleich drei ist, wobei die Anzahl von Patronen pro Plattenelement zwischen 500 und 1000 liegt, das Nutzvolumen der Wanne (10) der Filtervorrichtung (1) zwischen 9 m³ und 12 m³ beträgt, und bei welchem Verfahren eine Filterung eingesetzt wird, die eine Nominalfiltermenge zwischen 3000 l/min und 4000 l/min pro Filtervorrichtung gewährleistet,
- wenn die Anzahl von Plattenelementen gleich zwei ist, wobei die Anzahl von Patronen pro Plattenelement zwischen 500 und 1000 liegt, das Nutzvolumen der Wanne (10) der Filtervorrichtung (1) zwischen 6 m³ und 9 m³ beträgt, und bei welchem Verfahren eine Filterung eingesetzt wird, die eine Nominalfiltermenge zwischen 2000 l/min und 3000 l/min pro Filtervorrichtung gewährleistet,
- wenn die Anzahl von Plattenelementen gleich eins ist, wobei die Anzahl von Patronen zwischen 500 und 1000 liegt, das Nutzvolumen der Wanne (10) der Filtervorrichtung (1) zwischen 3 m³ und 6 m³ beträgt, und bei welchem Verfahren eine Filterung eingesetzt wird, die eine Nominalfiltermenge zwischen 1000 l/min und 2000 l/min pro Filtervorrichtung gewährleistet,
und bei welchem Verfahren für die Patronen Patronen ausgewählt werden, deren Länge zwischen 16 Inch und 24 Inch, mit anderen Worten zwischen 40,64 cm und 60,96 cm, beträgt, und bei welchem Verfahren durch Gegenstrom zu reinigende Filterpatronen verwendet werden und eine Reinigung der Patronen in regelmäßigen Zeitabständen vorgenommen wird, die an den Plattenfiltervorrichtungen nacheinander eingesetzt wird, wobei ein Fluidgegenstrom auf einer der Plattenfiltervorrichtungen Platte für Platte für jede Filtervorrichtung eingesetzt wird, während die anderen Plattenfiltervorrichtungen, die parallel angeordnet sind, die Filterung des Schmieröls gewährleisten.

2. Verfahren nach Anspruch 1, bei dem die Anzahl von Plattenelementen (11, 12, 13) pro Filtervorrichtung (1) gleich drei ist, wobei die Anzahl von Patronen pro Plattenelement zwischen 500 und 1000 liegt, und das Nutzvolumen der Wanne (10) der Filtervorrichtung (1) zwischen 9 m³ und 12 m³ beträgt, und bei welchem Verfahren eine Filterung eingesetzt wird, die eine Nominalfiltermenge zwischen 3000 l/min und 4000 l/min pro Filtervorrichtung gewährleistet.

3. Verfahren nach Anspruch 1, bei dem die Anzahl von Plattenelementen gleich zwei ist, wobei die Anzahl von Patronen pro Plattenelement zwischen 500 und 1000 liegt, und das Nutzvolumen der Wanne (10) der Filtervorrichtung (1) zwischen 6 m³ und 9 m³ beträgt, und bei welchem Verfahren eine Filterung eingesetzt wird, die eine Nominalfiltermenge zwischen 2000 1/min und 3000 l/min pro Filtervorrichtung gewährleistet.

4. Verfahren nach Anspruch 1, bei dem die Anzahl von Plattenelementen gleich eins ist, wobei die Anzahl von Patronen pro Plattenelement zwischen 500 und 1000 liegt, und das Nutzvolumen der Wanne (10) der Filtervorrichtung (1) zwischen 6 m³ und 9 m³ beträgt, und bei welchem Verfahren eine Filterung eingesetzt wird, die eine Nominalfiltermenge zwischen 1000 l/min und 2000 l/min pro Filtervorrichtung gewährleistet.

5. Verfahren nach einem der Ansprüche 1 bis 4, bei dem für jede Wanne der Filtervorrichtungen eine Wanne ausgewählt wird, deren Durchmesser (10) zwischen 1,5 Meter und 2,3 Meter beträgt.

6. Verfahren nach einem der Ansprüche 1 bis 5, bei dem für jede Wanne der Filtervorrichtungen eine Wanne ausgewählt wird, deren Höhe unter 4 m beträgt, zwischen 3 und 4 Meter liegt, wenn die Vorrichtung drei Plattenelemente (11, 12, 13) besitzt.

7. Verfahren nach einem der Ansprüche 1 bis 6, bei dem der Behälter für schmutziges Öl (2) auf einer unteren Ebene des Walzwerks (M) in einem Kellerraum angeordnet ist, wobei der Behälter für sauberes Öl (3) und das Filtersystem (100) außerhalb des Kellerraums auf einer oberen Ebene angeordnet sind.

8. Verfahren nach einem der Ansprüche 1 bis 7, bei dem der Behälter für schmutziges Öl (2) in dem Kellerraum in unmittelbarer Nähe des Walzwerks (M) angeordnet ist.

9. Verfahren nach einem der Ansprüche 1 bis 8, dessen Kreislauf ein Pumpensystem (4) und ein Ventilsystem (6) aufweist, um die am Walzwerk ankommende Menge von sauberem Öl zu kontrollieren, sowie ein Wärmetauschersystem (5), das dazu bestimmt ist, die Temperatur des sauberen Öls zu kontrollieren, und bei dem das Pumpensystem (4), das Ventilsystem (6) und das Wärmetauschersystem (5) außerhalb des Kellerraums auf einer oberen Ebene angeordnet sind.

## Claims

1. Method for recycling and filtering rolling mill oil implemented for a rolling mill requiring a rolling oil flow rate between 4000 1/min and 27,000 1/min in a facility for recycling and filtering rolling mill oil having a circuit comprising, successively, along the oil flow direction:
- a dirty oil tank (2),
- a filtering system (100) comprising several oil filtering devices (1) capable of filtering oil in parallel,
- a clean oil tank (3),
- and wherein each filtering device has:
- a tank (10) comprising an inlet for oil to be filtered, and a cover
- at least one plate element, or a plurality of plate elements, stacked in the inner volume of the tank, which are removable, capable of being removed from the tank via the top opening of the cover, each of the plate elements removably receiving filter cartridges, each of the hollow plate elements forming a collector for the oil filtered by the cartridges of said plate element, each of the plate elements comprising a filtered oil outlet removably connected to a corresponding outlet of the tank by means of a coupling,
**characterised in that**, for each of the filtering devices, a filtering device (1) is selected in which:
- there are between one and three plate elements (11, 12, 13),
- the total number of filter cartridges of the device is between 500 and 3000 cartridges,
and in which method a filtration is implemented providing a nominal filtration rate between 1000 1/min and 4000 1/min per filtering device (1), and wherein:
- when the number of plate elements (11, 12, 13) per filtering device (1) is equal to three, the number of cartridges per plate element is between 500 and 1000, the effective volume of the tank (10) of the filtering device (1) is between 9 m³ and 12 m³ and in which method a filtration is implemented providing a nominal filtration rate between 3000 l/min and 4000 l/min per filtering device,
- when the number of plate elements is equal to two, the number of cartridges per plate element is between 500 and 1000, the effective volume of the tank (10) of the filtering device (1) is between 6 m³ and 9 m³ and in which method a filtration is implemented providing a nominal filtration rate between 2000 l/min and 3000 l/min per filtering device
- when the number of plate elements is equal to one, the number of cartridges per plate element is between 500 and 1000, the effective volume of the tank (10) of the filtering device (1) is between 3 m³ and 6 m³ and in which method a filtration is implemented providing a nominal filtration rate between 1000 l/min and 2000 l/min per filtering device,
and in which method, for the cartridges, cartridges are chosen in which the length is between 16 inches and 24 inches, in other words between 40.64 cm and 60.96 cm, and in which method filter cartridges that can be cleaned by counterflow are used, and declogging of the cartridges is performed at regular time intervals implemented, on the plate filtering devices, one by one, using a fluid counterflow, on one of the plate filtering devices, plate by plate for each filtering device, and whereas the other plate filtering devices, disposed in parallel, filter the rolling oil.

2. Method according to claim 1 wherein the number of plate elements (11, 12, 13) per filtering device (1) is equal to three, the number of cartridges per plate element being between 500 and 1000, the effective volume of the tank (10) of the filtering device (1) is between 9 m³ and 12 m³ and in which method a filtration is implemented providing a nominal filtration rate between 3000 l/min and 4000 l/min per filtering device.

3. Method according to claim 1, wherein the number of plate elements per filtering device is equal to two, the number of cartridges per plate element being between 500 and 1000, the effective volume of the tank (10) of the filtering device (1) is between 6 m³ and 9 m³ and in which method a filtration is implemented providing a nominal filtration rate between 2000 l/min and 3000 l/min per filtering device.

4. Method according to claim 1, wherein the number of plate elements per filtering device is equal to one, the number of cartridges per plate element being between 500 and 1000, the effective volume of the tank (10) of the filtering device (1) is between 6 m³ and 9 m³ and in which method a filtration is implemented providing a nominal filtration rate between 1000 l/min and 2000 l/min per filtering device.

5. Method according one of claims 1 to 4 wherein, for each filtering device tank, a tank in which the diameter (10) is between 1.5 metres and 2.3 metres is chosen.

6. Method according to one of claims 1 to 5, wherein, for each filtering device tank, a tank in which the height is less than 4 m, between 3 and 4 meters when the device has three plate elements (11, 12, 13), is chosen.

7. Method according to one of claims 1 to 6, wherein said dirty oil tank (2) is located at a lower level of the rolling mill (M), in a cellar, the clean oil tank (3), and the filtering system (100) are located outside the cellar, on an upper level.

8. Method according to one of claims 1 to 7, wherein said dirty oil tank (2) is located in said cellar, in the immediate vicinity of said rolling mill (M).

9. Method according to one of claims 1 to 8, in which the circuit has a pump system (4) and a valve system (6) to control the clean oil flow rate arriving at the rolling mill, as well as an exchanger system (5), intended to control the temperature of the clean oil, and in that said pump system (4), said valve system (6) and the exchanger system (5) are located outside the cellar, on an upper level.
